# EUROPÄISCHE PATENTSCHRIFT

(11) **EP 1 668 840 B1**
(45) Veröffentlichungstag und Bekanntmachung des Hinweises auf die Patenterteilung: **13.12.2006**
(21) Anmeldenummer: 04786973.0
(22) Anmeldetag: 21.09.2004
(51) Int. Cl.: H04L 12/40, H04B 5/00, G05B 19/04, H04L 25/02

(54) **SERIELLER DATENBUS, BEWEGUNSSYSTEM SOWIE VERFAHREN ZUR EREIGNISGESTEUERTEN ÜBERTRAGUNG VON NACHRICHTEN**
SERIAL DATA BUS, MOTION SYSTEM AND METHOD FOR THE EVENT-DRIVEN TRANSMISSION OF MESSAGES
BUS DE DONNEES SERIE, SYSTEME DE DEPLACEMENT ET PROCEDE DE TRANSMISSION DE MESSAGES COMMANDEE PAR EVENEMENTS

(30) Priorität: 29.09.2003 DE 10345359
(43) Veröffentlichungstag der Anmeldung: 14.06.2006
(73) Patentinhaber: EISENMANN Maschinenbau GmbH & Co. KG, 71032 Böblingen (DE); Berghof Automationstechnik GmbH, 72800 Eningen (DE)
(72) Erfinder: SWOBODA, Werner, 71032 Böblingen (DE); HAGEL, Benno, 72793 Pfullingen (DE); OTT, Franz, 72379 Hechingen-Boll (DE); ARNOLD, Friedrich, 72770 Reutlingen (DE)
(74) Vertreter: Ostertag, Ulrich
(86) Internationale Anmeldenummer: PCT/EP2004/010555
(87) Internationale Veröffentlichungsnummer: WO 2005/036830

(56) Entgegenhaltungen:
- WO-A-01/86899
- DE-A- 19 700 110
- DE-A- 19 960 471

## Beschreibung

Die Erfindung betrifft einen seriellen Datenbus mit einer Datenleitung zur Übertragung von Bitzustände repräsentierenden elektrischen Signalen und mit mehreren Multi-Master-Teilnehmern, zwischen denen Nachrichten ereignisgesteuert nach dem Broadcast-Prinzip über die Datenleitung austauschbar sind. Die Erfindung betrifft ferner ein Bewegungssystem mit einem ersten Teil und einem zweiten Teil, das relativ zu dem ersten Teil beweglich angeordnet ist. Gegenstand der Erfindung ist außerdem ein serielles Verfahren zur ereignisgesteuerten Übervon Nachrichten zwischen mehreren Multi-Master-Teilnehmern tragung von Nachrichten zwischen mehreren Multi-Master-Teilnach dem Broadcast-Prinzip über einen Datenbus. nehmern nach dem Broadcast-Prinzip über einen Datenbus.

Ein serieller Datenbus, ein Transportsystem sowie ein Verfahren der genannten Art sind allgemein im Stand der Technik bekannt. Ein Beispiel für einen derartigen Datenbus ist der CAN-Bus, der insbesondere in der Automatisierungstechnik und in Kraftfahrzeugen eingesetzt wird. Der CAN-Bus ist ein kostengünstiger und dennoch sehr leistungsfähiger Feldbus, der eine besonders hohe Stör- und Ausfallsicherheit auch unter schwierigen elektrischen Umgebungsbedingungen aufweist. Ein CAN-Bus zeichnet sich ferner durch eine besonders hohe Echtzeitfähigkeit und hohe Übertragungssicherheit aus.

Bei einem CAN-Bus erfolgt der Informationsaustausch zwischen mehreren gleichberechtigten Teilnehmern, die häufig auch als Knoten bezeichnet werden, über Nachrichten (Telegramme) variabler Länge, die unterschiedliche Felder enthalten. Die Aussendung von Nachrichten durch die Teilnehmer erfolgt dabei ereignisgesteuert. Dies bedeutet, daß das Aussenden einer Nachricht von jedem Teilnehmer selbst angestoßen werden kann. Diese unsynchronisierte Art der Datenübertragung steht im Gegensatz zu synchronen Bussystemen, bei denen Teilnehmer nur innerhalb von ihnen zugewiesenen Zeitschlitzen Nachrichten senden dürfen. Da keiner der Teilnehmer von Haus aus Vorrang gegenüber den anderen Teilnehmern hat, gehört der CAN-Bus zu den sog. Multi-Master-Bussystemen.

Jede von einem Teilnehmer gesendete Nachricht wird nach dem Broadcast-Prinzip an alle übrigen Teilnehmer gesendet und von diesen empfangen. Die Nachrichten enthalten keine eigentlichen Adressierungsinformationen, sondern lediglich Identifikationsbits, die busweit eindeutig vergeben sind und den Inhalt der Nachricht sowie deren Priorität kennzeichnen.

Als Datenleitung wird in einem CAN-Bus eine symmetrische oder unsymmetrische Zweidrahtleitung gewählt, wobei im Störfall auch auf eine Eindrahtleitung zurückgegriffen werden kann, wenn entsprechende Schaltvorrichtungen vorgesehen sind.

CAN-Bussysteme und ähnliche Bussysteme der eingangs genannten Art werden u. a. als Kommunikationsmedium für spurgebundene Transportsysteme verwendet, wie sie beispielsweise in Form von elektrisch betriebenen Hängebahnen zum Transport von Kraftfahrzeugkarosserien im Automobilbau verwendet werden. Das Bussystem hat hierbei die Aufgabe, eine Steuerung der Fahrzeuge des Transportsystems zu ermöglichen, was auch einen Informationsaustausch unmittelbar zwischen einzelnen Fahrzeugen beinhaltet. Bislang sind dabei die einzelnen Fahrzeuge über Schleifkontakte mit der Datenleitung des Bussystems verbunden. Ein Abgriff über Schleifkontakte ist jedoch häufig aus mehreren Gründen nachteilig. Die Schleifkontakte sind zum einen verschleißanfällig und bedürfen deswegen einer intensiven Wartung. Dies schränkt die Anlagenverfügbarkeit ein; außerdem kann bei bestimmten Anwendungen der bei Schleifkontakten unvermeidliche Kohleabrieb nicht toleriert werden. Außerdem können Schleifkontakte nicht in explosionsgefährdeten Umgebungen eingesetzt werden, da die Ausbildung von Lichtbögen nicht zuverlässig verhindert werden kann.

Aus diesen Gründen ist verschiedentlich - allerdings im Zusammenhang mit andersartigen Übertragungssystemen - vorgeschlagen worden, bei solchen Transportsystemen die für eine Steuerung erforderlichen Informationen berührungslos an die Fahrzeuge zu übertragen.

Aus der DE 195 12 523 A1 ist beispielsweise ein Transportsystem bekannt, bei dem ein berührungslos arbeitendes Datenübertragungssystem mit einem berührungslos arbeitenden Energieübertragungssystem kombiniert ist. Das Datenübertragungssystem weist eine als Master fungierende Feststation sowie mehrere als Slaves fungierende Mobilstationen auf, die jeweils ein HF-Modem mit HF-Sendeteil und HF-Empfangsteil umfassen. Als Datenleitung wird ein geschlitztes Koaxialkabel verwendet. Umschalter erlauben einen Übergang von Sende- zu Empfangsbetrieb, wodurch ein bidirektionaler Datenaustausch möglich ist.

Aus der DE 196 49 682 C2 ist ein ähnliches Datenübertragungssystem bekannt, bei dem allerdings für die Energieübertragung und für die Datenübertragung ein einziger Wellenleiter verwendet wird. Die Energieübertragung - erfolgt dabei beispielsweise mit einem schmalbandigen Signal hoher Amplitude bei 100 kHz erfolgen. Zur Datenübertragung werden Frequenzbänder im MHz-Bereich verwendet. Eine Überlagerung eines hochfrequenten Datensignals mit einem niedrigfrequenten Träger zur Energieübertragung ist auch in der US 5 927 657 A beschrieben.

Aus der WO 98/57413 ist ein Transportsystem bekannt, bei dem als Datenleitung für eine berührungslose Datenübertragung zu den Fahrzeugen eine Anordnung aus einem elektrischen Leiter und einen diesen tragenden und davon isolierten Träger, z. B. ein Aluminiumprofil, verwendet wird.

Aus WO 0186899 ist eine Leiterstruktur zur induktiven Kopplung von beweglichen Elementen bekannt.

Die bislang vorgeschlagenen Konzepte für eine berührungslose Datenübertragung zu den Fahrzeugen in Transportsystemen sind jedoch sämtlich nicht zufriedenstellend, da sie den hohen Anforderungen an die Stör- und Ausfallsicherheit nicht genügen, die die moderne Automatisierungstechnik stellt.

Aufgabe der Erfindung ist es deswegen, einen seriellen Datenbus, ein Bewegungssystem sowie ein Verfahren der eingangs genannten Art derart weiterzuentwickeln, daß eine hohe Ausfallsicherheit und Robustheit auch unter widrigen Umgebungsbedingungen erzielt wird.

Bei einem Datenbus der eingangs genannten Art wird diese Aufgabe dadurch gelöst, daß mindestens zwei Teilnehmer einen induktiv an die Datenleitung ankoppelbaren Sende-/Empfangskopf aufweisen, über den berührungslos elektrische Signale von der Datenleitung abgegriffen und auf diese übertragen werden können, und daß mit der Datenleitung ein Verstärker galvanisch verbunden ist, der elektrische Signale, die von den mindestens zwei Teilnehmern induktiv auf die Datenleitung übertragen worden sind, empfängt und nach deren Verstärkung wieder in die Datenleitung einkoppelt.

Bezüglich des Bewegungssystems wird die Aufgabe dadurch gelöst, daß auf den beiden Teilen Teilnehmer eines derartigen Datenbusses angeordnet sind.

Bezüglich des Verfahrens wird die Aufgabe durch folgende Schritte gelöst:
a) Berührungsloses Übertragen eines elektrischen Signals von einem Teilnehmer auf eine Datenleitung des Datenbuses über einen induktiv an die Datenleitung angekoppelten Sende-/Empfangskopf des Teilnehmers;
b) Emfang des durch die induktive Übertragung abgeschwächten elektrischen Signals durch einen galvanisch mit der Datenleitung verbundenen Verstärker;
c) Verstärken des empfangenen Signals in dem Verstärker;
d) Einkoppeln des verstärkten Signals auf die Datenleitung;
e) Empfang des auf die Datenleitung übertragenen verstärkten Signals durch einen induktiv an die Datenleitung angekoppelten Sende-/Empfangskopf eines anderen Teilnehmers.

Durch die vergleichsweise hohe Dämpfung, die elektrische Signale beim induktiven Einkoppeln zwischen dem Sende-/Empfangskopf und der Datenleitung erfahren, erreichen die von einem Teilnehmer unmittelbar in die Datenleitung eingekoppelten Signale nur einen relativ niedrigen Signalpegel. Dieser ist so niedrig, daß die übrigen Teilnehmer diese Signale nicht oder nicht zuverlässig empfangen können, da auch beim Auskoppeln aus der Leitung eine entsprechende Dämpfung eintritt. Der erfindungsgemäß vorgesehene Verstärker ermöglicht durch die erneute Aussendung der Signale mit erhöhtem Signalpegel eine Anhebung des Signal-Rausch-Abstands, wodurch die Fehlerwahrscheinlichkeit bei der Datenübertragung erheblich verringert wird. Dies wirkt sich auch dann positiv aus, wenn der Datenbus über eine Fehlererkennung, z. B. einem Cyclic Redundancy Check (CRC), verfügt, da auf diese Weise die Zahl der erforderlichen Neuübertragungen von Nachrichten verringert wird, wodurch die Echtzeitfähigkeit des Datenbusses erhöht wird. Außerdem ist eine Verstärkung der Signale auch zweckmäßig im Hinblick auf eine Anbindung des Datenbusses an andere Kommunikationseinrichtungen, z. B. einen übergeordneten Zentralrechner.

Aufgrund der berührungslosen Ankopplung der mindestens zwei Teilnehmer an die Datenleitung eignet sich der erfindungsgemäße Datenbus besonders für explosionsgefährdete Umgebungen, da es im Gegensatz zu Schleifkontakten nicht zur Funkenbildung kommen kann. Der serielle Datenbus läßt sich außerdem vorteilhaft in Reinraum-Umgebungen einsetzen, da durch die induktive Ankopplung kein Abrieb entsteht, wie dies bei Schleifkontakten der Fall ist. Andererseits kann der erfindungsgemäße Datenbus auch in besonders verschmutzter Umgebung die Zuverlässigkeit der Datenübertragung verbessern, da auf der Datenleitung sich absetzender Schmutz die induktive Ankopplung der Teilnehmer nicht nennenswert beeinträchtigt. Bei der Verwendung von Schleifkontakten hingegen kann sich im Kontaktbereich niederlassender Schmutz die elektrische Verbindung empfindlich stören.

Der erfindungsgemäße Datenbus kann vorteilhaft auch mit lediglich einem induktiv an die Datenleitung angekoppelten Teilnehmer betrieben werde. Eine Einkopplung der von dem Verstärker verstärkten Signale in die Datenleitung ist dann überflüssig und kann entfallen. Der Datenbus kann aber dennoch einen derartigen Verstärker aufweisen, so daß der Datenbus mit den gleichen Systemkomponenten mit einem oder auch mit mehreren induktiv angekoppelten Teilnehmern betrieben werden kann.

Eine Verwendung mit lediglich einem induktiv angekoppelten.Teilnehmer kommt insbesondere bei Bewegungssystemen wie beispielsweise Gebäudeaufzügen in Betracht, bei denen sich nur ein Teil bewegt, während die übrigen Teile, die über die Datenleitung miteinander und mit dem beweglichen Teil kommunizieren, ortsfest sind. Bei einem Gebäudeaufzug stellt der bewegliche Teilnehmer beispielsweise eine in der Aufzugskabine angeordnete Steuerung dar, während die ortsfesten Teilnehmer an den Stockwerken angeordnet sind.

Das Vorsehen lediglich eines induktiv angekoppelten Teilnehmers kann auch bei Maschinen in Betracht kommen, bei denen an einem bewegten Maschinenteil lediglich ein einziger Aktuator oder Sensor Nachrichten mit einer Zentral steuerung austauschen soll.

Ein weiterer Vorteil des erfindungsgemäßen Datenbusses besteht darin, daß er sich überwiegend mit bereits auf dem Markt erhältlichen und preisgünstigen Standardkomponenten aufbauen läßt. Lediglich der Verstärker sowie die Sende-/Empfangsköpfe der Teilnehmer sowie ggf. die Datenleitung treten als neue Komponenten hinzu. Die zur Regenerierung und Auswertung von Nachrichten erforderlichen Bausteine können hingegen gegebenenfalls ohne weitere Modifikationen übernommen werden. Falls die Nachrichten dem CAN-Standard (ISO 11898) genügen, so kommt insbesondere der Einsatz der für CAN-Bussysteme standardisierten Komponenten in Betracht.

Auch wenn die Nachrichten nicht dem im CAN-Standard festgelegten Nachrichtenformat entsprechen, so können sie bei einer bevorzugten Ausgestaltung der Erfindung Prioritätsbits enthalten, durch deren Empfang ein Teilnehmer im Fall eines gleichzeitigen Sendens von Nachrichten durch mehrere Teilnehmer im Wege eines Vergleichs mit von ihm selbst gesendeten Prioritätsbits ermitteln kann, ob er die Priorität zum Senden von Datenbits besitzt. Auf diese Weise ist gewährleistet, daß dann, wenn eine eindeutige Prioritätsabfolge besteht, stets einer der Teilnehmer die Datenleitung zur Aussendung von Nachrichten verwenden kann. Gegenseitige Blockierungen mehrerer Teilnehmer, wie sie teilweise in anderen Bussystemen auftreten können, lassen sich auf diese Weise vermeiden.

Bei einer vorteilhaften Weiterbildung dieser Ausgestaltung besitzt ein Teilnehmer nicht die Priorität zum Senden von Datenbits, wenn er ein Signal empfängt, das einen dominanten logischen Bitzustand repräsentiert und er annähernd gleichzeitig ein Signal sendet, das einen rezessiven logischen Bitzustand repräsentiert. Durch diese zerstörungsfreie bitweise Arbitrierung wird erreicht, daß im Fall eines gleichzeitigen Sendens von Nachrichten die Teilnehmer nach und nach das Senden von Signalen abbrechen, und zwar in der umgekehrten Reihenfolge der Priorität der ausgesendeten Nachrichten.

Bei dem erfindungsgemäßen Datenbus kann das den dominanten Bitzustand repräsentierende Signal ein Stromimpuls und das rezessiven Bitzustand repräsentierende Signal das Fehlen eines Stromimpulses sein. In Betracht kommen aber auch andere Signalformen, z. B. Impulsfolgen unterschiedlicher Frequenz. Maßgeblich ist hierbei lediglich, daß eine Überlagerung eines den dominanten Bitzustand repräsentierenden Signals mit einem den rezessiven Bitzustand repräsentierenden Signals zu einem Summensignal führt, das nicht mit dem rezessiven Ausgangssignal identisch ist. Nur dann nämlich können die Teilnehmer erkennen, ob ein anderer Teilnehmer ein den dominanten Bitzustand repräsentierendes Signal gesendet hat, während er selbst nur ein den rezessiven Bitzustand repräsentierendes Signal ausgesendet hat. Es versteht sich, daß mit einem Stromimpuls in einem ohmschen Leiter auch ein Spannungsimpuls einhergeht, so daß die Signale durch Spannungsschwankungen beschrieben werden können.

Bei einer bevorzugten Ausgestaltung der Erfindung umfaßt der Sende-/Empfangskopf
a) eine Sendespule,
b) eine Empfangsspule, die mit der Sendespule zu einer Sende-/Empfangsspule zusammengefaßt sein kann,
c) ein Sendemodul, durch das aus digitalen Informationen elektrische Signale erzeugbar sind, mit denen die Sendespule beaufschlagbar ist,
d) ein Empfangsmodul, durch das digitale Informationen aus elektrischen Signalen erzeugbar sind, die von der Empfangsspule abgreifbar sind, und
e) eine mit dem Sendemodul und dem Empfangsmodul verbundene Logikeinheit zum Zusammenstellen und Auswerten von Nachrichten aus von dem Empfangsmodul erhaltenen digitalen Informationen und zum Erzeugen von digitalen Informationen für das Sendemodul.

Die Logikeinheit kann ferner die Aufgabe haben, die Priorität von Nachrichten zu ermitteln, falls die Nachrichten die oben angesprochenen Prioritätsbits enthalten. Falls die Nachrichten das im CAN-Standard festgelegte Format aufweisen, so kann die Logikeinheit preisgünstige Standardkomponenten enthalten.

Aus Gründen der Übertragungssicherheit sollte verhindert werden, daß ein von dem Verstärker verstärktes Signal ein Signal überlagert, das zu einem späteren Zeitpunkt von einem der Teilnehmer in die Datenleitung eingekoppelt worden ist. Sichergestellt werden kann dies beispielsweise dadurch, daß der Verstärker nach einem Empfang eines Signals von einem der mindestens zwei Teilnehmer das verstärkte Signal innerhalb von 50 %, vorzugsweise von 25 %, der Taktlänge auf die Datenleitung überträgt, die mindestens zwischen zwei von einem der mindestens zwei Teilnehmer auf die Datenleitung übertragenen Signalen liegt.

Die erfindungsgemäße induktive Ankopplung der Teilnehmer an die Datenleitung erlaubt es, die Teilnehmer räumlich flexibel entlang der Datenleitung zu positionieren. Da bei der induktiven Ankopplung keine Funken entstehen können, kann der Datenbus auch in explosionsgefährdeten Umgebungen eingesetzt werden. Der erfindungsgemäße Datenbus allerdings kann so ausgelegt sein, daß einzelne Teilnehmer nicht induktiv, sondern auf herkömmlichem Weg an die Datenleitung angekoppelt sind.

Besonders bevorzugt ist es allerdings, wenn mindestens ein Teilnehmer entlang der Datenleitung verfahrbar angeordnet ist. Auf diese Weise werden die Vorteile einer berührungslosen induktiven Ankopplung besonders deutlich. Bei dem Teilnehmer kann es sich beispielsweise um einen Sensor handeln, der in unterschiedlichen Positionen Meßwerte aufnehmen soll.

Handelt es sich bei dem Teilnehmer hingegen um ein spurgebundenes Fahrzeug, so entsteht ein erfindungsgemäßes Transportsystem, das beispielsweise als Hängebahnsystem zum Transport von Gegenständen, insbesondere von Kraftfahrzeugkarosserien, ausgeführt sein kann.

In einem solchen Transportsystem kann mindestens ein Fahrzeug eine Fahrzeugsteuerung umfassen, die mit dem Sende-/Empfangskopf verbunden ist. Auf diese Weise kann der Datenbus zur Steuerung der Fahrzeuge verwendet werden.

Der erfindungsgemäße Datenbus erlaubt einen Datenaustausch unmittelbar zwischen den Fahrzeugen über die Datenleitung. Auf diese Weise können zwischen den Fahrzeugen beispielsweise Orts- und Abstandsinformationen übertragen werden, so daß sich die Fahrzeuge im wesentlichen selbst entlang der Spur steuern können. Im allgemeinen wird es aber dennoch erforderlich sein, eine Steuerungseinheit zur Steuerung der Fahrzeuge vorzusehen, die die von den Fahrzeugen einzuschlagenden Wege und deren Haltepositionen vorgibt. Eine solche Steuerungseinheit kann z. B. einer der Teilnehmer des Datenbusses sein.

Bei einer bevorzugten Ausgestaltung der Erfindung ist jedoch die Steuerungseinheit zur Steuerung der Fahrzeuge entlang des Datenbusses mit dem Verstärker verbunden, z. B. über einen CAN-Bus. Dies hat den Vorteil, daß auf allen Steuerungsebenen die gleiche Kommunikationsstruktur eingesetzt werden kann.

Vorzugsweise ist das Transportsystem in mehrere Segmente unterteilt, die jeweils einen Datenbus mit einer Steuerungseinheit umfassen, wobei die Steuereinheiten für die einzelnen Segmente mit einer übergeordneten Zentralsteuerung verbunden sind. Da die Länge der realisierbaren Datenleitungen begrenzt ist, lassen sich durch einen solchen segmentartigen Aufbau praktisch beliebig große Transportnetze auf der Grundlage des erfindungsgemäßen Datenbusses realisieren. Die für die Fahrzeuge vorgesehene Spur kann sich dabei über mehrere Segmente hinweg erstrekken, so daß Fahrzeuge Segmentgrenzen überfahren können. Mit Hilfe der übergeordneten Zentralsteuerung können die Fahrzeuge somit durch das gesamte Streckennetz hindurch navigiert werden.

Weitere Vorteile und Merkmale der Erfindung ergeben sich aus der nachfolgenden Beschreibung eines Ausführungsbeispiels anhand der Zeichnung. Darin zeigen:
- Figur 1: eine Prinzipskizze eines erfindungsgemäßen Datenbusses;
- Figur 2: einen Ausschnitt aus einem Hängebahnsystem in einer schematischen Seitenansicht,
- Figur 3: ein Netzwerk zur Steuerung eines Transportsystems unter Verwendung der in Figur 1 dargestellten Datenbusse.

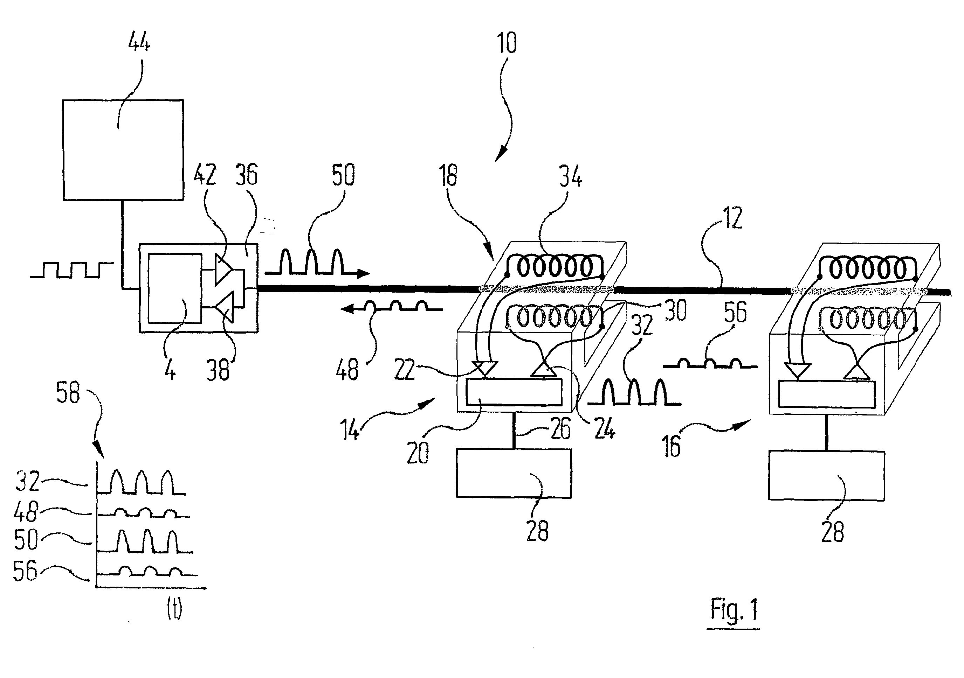

In Figur 1 ist ein Datenbus schematisch dargestellt und insgesamt mit 10 bezeichnet. Der Datenbus 10 umfaßt eine Datenleitung 12, die als symmetrische Zweidrahtleitung ausgebildet ist, deren Drähte durch Brücken oder Stege auf Abstand gehalten werden. Zu dem Datenbus 10 gehören außerdem zwei Teilnehmer 14 und 16, die identisch aufgebaut sind. Im folgenden wird deswegen lediglich der Aufbau des Teilnehmers 14 näher erläutert.

Der Teilnehmer 14 weist einen Sende-/Empfangskopf 18 auf, der eine insgesamt U-förmige Form hat. In dem Sende-/Empfangskopf 18 sind eine Logikeinheit 20, ein Empfangsmodul 22, ein Sendemodul 24, eine Empfangsspule 34 und eine Sendespule 30 angeordnet.

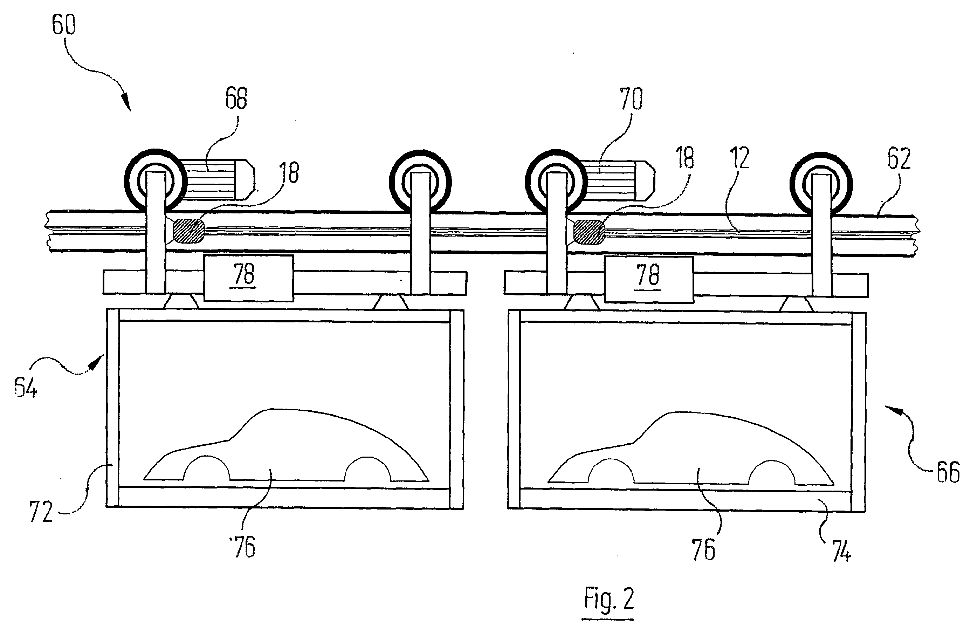

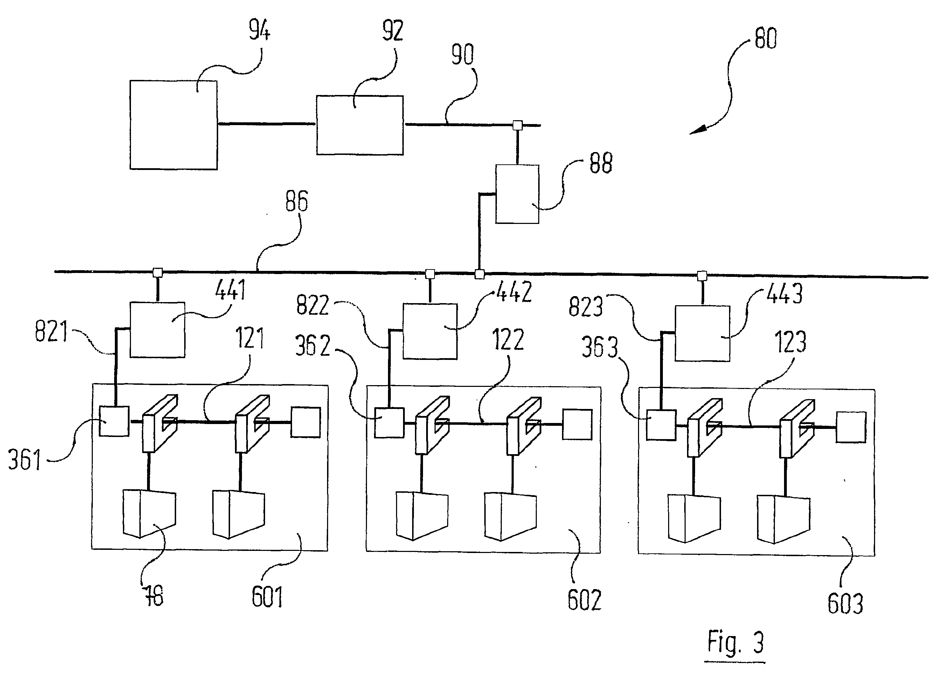

Die Logikeinheit 20 ist über einen CAN-Bus 26 mit einer Systemkomponente 28 des Teilnehmers 14 verbunden, bei der es sich beispielsweise um eine Fahrzeugsteuerung handeln kann, wie dies weiter unten mit Bezug auf die Figuren 2 und 3 näher erläutert wird. Als Systemkomponente 28 kommen jedoch auch Sensoren oder sonstige Meßeinheiten, Aktoren oder Steuergeräte für unterschiedliche Zwecke in Betracht. Die Logikeinheit 20 hat die Aufgabe, die über den CAN-Bus 26 erhaltenen Nachrichten zwischenzuspeichern und so aufzubereiten, daß sie über die Datenleitung 12 übertragen werden können.

Zu diesem Zweck ist die Logikeinheit 20 mit dem Sendemodul 24 verbunden, das aus von der Logikeinheit 20 bereitgestellten Nachrichten nach dem CAN-Format elektrische Signale erzeugt, mit denen die Sendespule 30 beaufschlagbar ist, die in einem der Schenkel des U-förmigen Sende-/Empfangskopfs 18 angeordnet ist. Ein Bit mit dem logischen Pegel 1 wird durch das Sendemodul 24 in einen Stromimpuls umgewandelt, während ein der logischen Null entsprechendes Bit dem Fehlen eines Stromimpulses entspricht. Ein von dem Sendemodul 24 erzeugtes Sendesignal ist in der Figur 1 rechts neben dem Sende-/Empfangskopf 18 beispielhaft angedeutet und mit 32 bezeichnet.

Das Empfangsmodul 22 ist mit der Empfangsspule 34 verbunden und hat die Aufgabe, über die Empfangsspule 34 von der Datenleitung 12 aufgenommene elektrische Signale in digitale Informationen umzuwandeln, die von der Logikeinheit 20 weiter aufbereitet werden können.

Bestandteil des Datenbusses 10 ist ferner ein insgesamt mit 36 bezeichneter Verstärker, der galvanisch mit der Datenleitung 12 verbunden ist. In dem Verstärker 36 befindet sich ein Eingangsverstärker 38, der über die Datenleitung 12 übertragene elektrische Signale verstärkt und einem Logikmodul 40 zuführt. Das Logikmodul 40 hat u. a. die Aufgabe zu überprüfen, ob es sich bei den empfangenen und von dem Eingangsverstärker 38 verstärkten Signalen tatsächlich um Signale handelt, die von einem der Teilnehmer 14 oder 16 erzeugt worden sind. Nur solche Signale, die nicht als Störsignale erkannt werden, werden durch das Logikmodul 40 dem Ausgangsverstärker 42 zugeführt und wieder auf die Datenleitung 12 gegeben. Ggf. kann in dem Logikmodul 40 auch eine Signalregenerierung stattfinden.

In dem dargestellten Ausführungsbeispiel ist der Verstärken 36 über einen CAN-Bus mit einer Steuerungseinheit 44 verbunden, die der Steuerung der Systemkomponenten 28 in den Teilnehmern 14, 16 dient.

Der vorstehend beschriebene Datenbus 10 funktioniert wie folgt:

Gibt eine Systemkomponente 28 des Teilnehmers 14 den Anstoß, eine Nachricht an den Teilnehmer 16 zu übermitteln, so wird die betreffende Nachricht über den CAN-Bus 26 des Teilnehmers 14 an die Logikeinheit 20 übermittelt. Diese erstellt daraus eine dem CAN-Standard entsprechende Nachricht, die das Sendemodul 24 in ein Sendesignal 32 übersetzt und damit die Sendespule 30 beaufschlagt.

Die Datenleitung 12 verläuft so zwischen den Schenkeln des Sende-/Empfangskopfs 18, daß sich die Sendespule 30 in unmittelbarer Nähe der Datenleitung 12 befindet. Die durch das Sendesignal 32 erregte Sendespule 30 erzeugt induktiv in der Datenleitung 12 einen Stromfluß, wodurch das Sendesignal 32 in die Datenleitung 12 eingekoppelt wird. Aufgrund der nicht unbeträchtlichen Einkoppeldämpfung weist das eingekoppelte Sendesignal jedoch nur noch eine vergleichsweise geringe Signalstärke auf, wie dies in der Figur 1 mit 48 angedeutet ist. Das eingekoppelte gedämpfte Signal 48 wird über die Datenleitung 12 an den Verstärker 36 übertragen. Dieser überprüft nach Vorverstärkung durch den Eingangsverstärker 38, ob das gedämpfte Signal 48 nicht lediglich eine Störung darstellt. Falls dies nicht der Fall ist, wird das Signal 48 in dem Ausgangsverstärker 42 erneut verstärkt und wieder auf die Datenleitung 12 gegeben. Die Taktlänge des gedämpften Signals 48, die bei dem dargestellten Ausführungsbeispiel 20 *µ*s beträgt, wird durch die Verstärkung in dem Verstärker 36 nicht verändert. Falls die einzelnen Impulse durch die Einkopplung auf den Datenleiter 12 zeitlich gedehnt werden, sorgt die Logikeinheit 40 dafür, daß die ursprüngliche Pulslänge, die z. B. 700 ns betragen kann, bei der Verstärkung erhalten bleibt.

Das verstärkte Sendesignal, das in der Figur 1 mit 50 bezeichnet ist, induziert in den Empfangsspulen 34 der Sende-/ Empfangsköpfe 18 der Teilnehmer 14, 16 ein Empfangssignal, das aufgrund der induktiven Ankopplung ebenfalls vergleichsweise stark gedämpft ist. In der Figur 1 ist dieses Empfangssignal mit 56 angedeutet. In dem Empfangsmodul 22 der Sende-/Empfangsköpfe 18 wird das Empfangssignal 56 verstärkt und in digitale Informationen umgewandelt, aus denen die Nachrichten wieder zusammengesetzt werden.

In einem Graphen 58 sind das Sendesignal 32, das gedämpfte Sendesignal 48, das verstärkte Sendesignal 50 sowie das Empfangssignal 56 über der Zeitachse schematisch wiedergegeben. Darin ist erkennbar, daß die Teilnehmer 14, 16 ein gesendetes Signal empfangen können, bevor ein neues Signal in die Datenleitung 12 eingekoppelt wird. Die Verzögerung, mit der der Verstärker 36 ein empfangenes Signal verstärkt wieder auf die Datenleitung 12 gibt, beträgt in dem dargestellten Ausführungsbeispiel lediglich etwa 1 bis 2 µs und damit etwa ein Viertel der Taktlänge (Bitlänge), die zwischen der Aussendung von Impulsen vergeht.

Die Zusammenstellung der Nachrichten in den Logikeinheiten 20 entspricht bei dem dargestellten Ausführungsbeispiel, wie bereits erwähnt, dem CAN-Standard. Dies bedeutet, daß jede Nachricht mehrere Prioritätsbits enthält, durch die im Fall eines gleichzeitigen Sendens von Nachrichten durch mehrere Teilnehmer diese im Wege einer Arbitrierung ermitteln können, welche Nachricht die höchste Priorität hat und deswegen vollständig gesendet werden darf. Das Aussenden von Nachrichten mit niedrigerer Priorität wird abgebrochen, sobald die Logikeinheit 20 eines Teilnehmers 14, 16 feststellt, daß die von ihr gesendete Nachricht eine niedrigere Priorität aufweist. Die dominanten Bits, durch die eine höhere Priorität gekennzeichnet wird, werden dabei durch Stromimpulse wiedergegeben, während rezessive Bits dem Ausbleiben eines Stromimpulses entsprechen.

Aufgrund der induktiven Ankopplung der Sende-/Empfangsköpfe 18 können die Teilnehmer 14, 16 entlang der Datenleitung 12 verfahren werden. Es muß dabei lediglich sichergestellt bleiben, daß die Datenleitung 12 zwischen den Schenkeln der Sende-/Empfangsköpfe 18 verläuft, so daß eine induktive Ankopplung über die Empfangsspulen 34 und Sendespulen 30 erhalten bleibt. Der Sende-/Empfangskopf 18 kann bei bodengeführten Transportsystemen auch flach sein und wird dann in direktem Abstand über die Datenleitung 12 geführt.

Die Verfahrbarkeit der Sende-/Empfangsköpfe 18 entlang der Datenleitung 12 erlaubt es, den Datenbus als Kommunikationsmedium in Transportsystemen einzusetzen. Ein Beispiel für ein solches Transportsystem sind Hängebahnen, wie sie in der Fertigungstechnik zum Transport von Gegenständen, z. B. von Kraftfahrzeugkarosserien, eingesetzt werden. Die Figur 2 zeigt einen Ausschnitt aus einer derartigen Hängebahn in einer schematischen Seitenansicht. Die insgesamt mit 60 bezeichnete Hängebahn umfaßt eine Schiene 62, auf der Fahrzeuge 64, 66 angehängt sind. Die Fahrzeuge 64, 66 sind mit elektrischen Antrieben 68 bzw. 70 versehen und weisen jeweils ein Traggerüst 72, 74 auf, das zur Aufnahme von Fahrzeugkarosserien 76 ausgelegt sind.

An der Schiene 62 ist die Datenleitung 12 des Datenbusses 10 befestigt. Ferner weist jedes der Fahrzeuge 64, 66 einen Sende-/Empfangskopf 18 auf, der die Datenleitung 12 umgreift und mit einer Fahrzeugsteuerung 78 verbunden ist.

Die Figur 3 zeigt das gesamte Netzwerk 80, das zum Informationsaustausch in dem Hängebahnsystem 60 vorgesehen ist. Das Netzwerk 80 ist auf der untersten Netzwerkebene in mehrere Segmente 601, 602, 603 unterteilt, die jeweils den in der Figur 1 gezeigten Aufbau haben. Die Datenleitungen 121, 122, 123 der Segmente 601, 602, 603 sind dabei jeweils an den Schienen 62 des Hängebahnsystems 60 angeordnet. Steuerungseinheiten 441, 442, 443 für die Segmente 601, 602, 603 sind jeweils über einen CAN-Bus 821, 822, 823 mit Verstärkern 361, 362, 363 verbunden, und außerdem über einen weiteren CAN-Bus 86, einen Umsetzer 88 und einen Ethernet-Bus 90 mit einer Steuerungslogik 92 verbunden, die ihrerseits Informationen mit einer Zentralsteuerung 94 der gesamten Fertigungsanlage austauscht.

Innerhalb der einzelnen Segmente 601, 602, 603 können sich die einzelnen Fahrzeuge, von denen in der Figur 3 lediglich die Fahrzeugsteuerung 78 angedeutet ist, frei entlang der Schienen 62 bewegen. Die Datenleitungen 121, 122, 123 können dabei auch so in den Schienen verlegt sein, daß sie annähernd bündig aneinander anstoßen, wodurch ein Übergang der Fahrzeuge 64, 66 von einem Segment in ein benachbartes Segment ermöglicht wird. Über das Netzwerk 80 können somit sämtliche Fahrzeuge 64, 66 zentral gesteuert werden. Darüber hinaus ist auch ein Austausch von Informationen unmittelbar zwischen den Fahrzeugen 64, 66 über das Netzwerk 80 möglich. Während Fahrzeuge innerhalb eines Segments 601, 602, 603 unmittelbar miteinander über die Datenleitungen 121, 122, 123 kommunizieren können, ist bei dem segmentüberschreitenden Datenaustausch die Einbeziehung der übergeordneten Segmentsteuerungen 841, 842, 843 erforderlich.

## Patentansprüche

1. Serieller Datenbus mit einer Datenleitung (12) zur Übertragung von Bitzustände reprästentierenden elektrischen Signalen (48, 50) und mit mehreren Multi-Master-Teilnehmern (14, 16), zwischen denen Nachrichten ereignisgesteuert nach dem Broadcast-Prinzip über die Datenleitung (12) austauschbar sind,
**dadurch gekennzeichnet, daß**
mindestens zwei Teilnehmer (14, 16) einen induktiv an die Datenleitung (12) ankoppelbaren Sende-/Empfangskopf (18) aufweisen, über den berührungslos elektrische Signale (50) von der Datenleitung abgegriffen und auf diese übertragen werden können, und daß mit der Datenleitung (12) ein Verstärker (36) galvanisch verbunden ist, der elektrische Signale (48), die von den mindestens zwei Teilnehmern (14, 16) induktiv auf die Datenleitung (12) übertragen worden sind, empfängt und nach deren Verstärkung wieder in die Datenleitung (12) einkoppelt.

2. Datenbus nach Anspruch 1, **dadurch gekennzeichnet, daß** die Nachrichten Brioritätsbits enthalten, durch deren Empfang ein Teilnehmer (14, 16) im Fall eines gleichzeitigen Sendens von Nachrichten durch mehrere Teilnehmer (14, 16) im Wege eines Vergleichs mit von ihm selbst gesendeten Prioritätsbits ermitteln kann, ob er die Priorität zum Senden von Datenbits besitzt.

3. Datenbus nach Anspruch 2, **dadurch gekennzeichnet, daß** ein Teilnehmer (14, 16) nicht die Priorität zum Senden von Datenbits besitzt, wenn er ein Signal empfängt, das einen dominanten logischen Bitzustand repräsentiert, und er annähernd gleichzeitig ein Signal sendet, das einen rezessiven logischen Bitzustand repräsentiert.

4. Datenbus nach einem der vorhergehenden Ansprüche, **dadurch gekennzeichnet, daß** das den dominanten Bitzustand repräsentierende Signal ein Stromimpuls und das den rezessiven Bitzustand repräsentierende Signal das Fehlen eines Stromimpulses ist.

5. Datenbus nach einem der vorhergehenden Ansprüche, **dadurch gekennzeichnet, daß** der Sende-/Empfangskopf (18) umfaßt:
a) eine Sendespule (30),
b) eine Empfangsspule (34),
c) ein Sendemodul (24), durch das aus digitalen Informationen elektrische Signale (32) erzeugbar sind, mit denen die Sendespule (30) beaufschlagbar ist,
d) ein Empfangsmodul (22), durch das digitale Informationen aus elektrischen Signalen (50) erzeugbar sind, die von der Empfangsspule (34) abgreifbar sind, und
e) eine mit dem Sendemodul (24) und dem Empfangsmodul (22) verbundene Logikeinheit (20) zum Zusammenstellen und Auswerten von Nachrichten aus von dem Empfangsmodul (22) erhaltenen digitalen Informationen und zum Erzeugen von digitalen Informationen für das Sendemodul (24).

6. Datenbus nach einem der Ansprüche 2 oder 3 und nach Anspruch 5, **dadurch gekennzeichnet, daß** durch die Logikeinheit (20) die Priorität von Nachrichten ermittelbar ist.

7. Datenbus nach einem der vorhergehenden Ansprüche, **dadurch gekennzeichnet, daß** durch den Verstärker (36) nach einem Empfang eines Signals (48) von einem der mindestens zwei Teilnehmer (14, 16) das verstärkte Signal (50) innerhalb von 50 %, vorzugsweise innerhalb von 25 %, der Taktlänge auf die Datenleitung (12) übertragbar ist, die mindestens zwischen zwei von einem der mindestens zwei Teilnehmer (14, 16) auf die Datenleitung (12) übertragenen Signalen liegt.

8. Datenbus nach einem der vorhergehenden Ansprüche, **dadurch gekennzeichnet, daß** die Nachrichten das in dem CAN-Standard festgelegte Format aufweisen.

9. Datenbus nach einem der vorhergehenden Ansprüche, **dadurch gekennzeichnet, daß** mindestens ein Teilnehmer (14, 16) entlang der Datenleitung (12) verfahrbar angeordnet ist.

10. Bewegungssystem mit einem ersten Teil und einen zweiten Teil, das relativ zu dem ersten Teil beweglich angeordnet ist, **dadurch gekennzeichnet, daß** auf den beiden Teilen Teilnehmer eines Datenbusses nach Anspruch 9 ortsfest angeordnet sind.

11. Bewegungssystem nach Anspruch 10, **dadurch gekennzeichnet, daß** es als spurgebundenes Transportsystem mit einer Spur (62) und mehreren entlang der Spur (62) verfahrbaren Fahrzeugen (64, 66), ausgeführt ist, wobei das Transportsystem (60) zur Kommunikation zwischen den Fahrzeugen (64, 66) einen Datenbus (10) nach Anspruch 9 umfaßt, dessen Datenleitung (12) entlang der Spur (62) des Transportsystems (60) angeordnet ist und dessen Teilnehmer die Fahrzeuge (64, 66) sind.

12. Bewegungssystem nach Anspruch 11, **dadurch gekennzeichnet, daß** mindestens ein Fahrzeug eine Fahrzeugsteuerung (78) umfaßt, die mit dem Sende-/Empfangskopf (18) verbunden ist.

13. Bewegungssystem nach Anspruch 11 oder 12, **dadurch gekennzeichnet, daß** der Verstärker (36) mit einer Steuerungseinheit (44; 441, 442, 443) zur Steuerung der Fahrzeuge (64, 66) entlang des Datenbusses (10) verbunden ist.

14. Bewegungssystem nach Anspruch 13, **dadurch gekennzeichnet, daß** der Verstärker (36; 361, 362, 363) mit der Steuerungseinheit (44, 441, 442, 443) über einen CAN-Bus (821, 822, 823) verbunden ist.

15. Bewegungssystem nach Anspruch 13 oder 14, **dadurch gekennzeichnet, daß** es in mehrere Segmente (601, 602, 603) unterteilt ist, die jeweils einen Datenbus (10) mit einer Steuerungseinheit (441, 442, 443) umfassen, und daß die Steuerungseinheit (441, 442, 443) für die einzelnen Segmente mit einer übergeordneten Zentralsteuerung (94) verbunden ist.

16. Bewegungssystem nach Anspruch 15, **dadurch gekennzeichnet, daß** sich die Spur (62) für die Fahrzeuge (64, 66) derart über mehrere Segmente (601, 602, 603) hinweg erstreckt, daß Fahrzeuge (64, 66) Segmentgrenzen überfahren können.

17. Bewegungssystem nach einem der Ansprüche 11 bis 16, **dadurch gekennzeichnet, daß** es als Hängebahnsystem (60) zum Transport von Gegenständen, insbesondere von Kraftfahrzeugkarosserien (76), ausgeführt ist.

18. Serielles Verfahren zur ereignisgesteuerten Übertragung von Nachrichten zwischen mehreren Multi-Master-Teilnehmern (14, 16) nach dem Broadcast-Prinzip über einen Datenbus (10), **gekennzeichnet durch** folgende Schritte:
a) Berührungsloses Übertragen eines elektrischen Signals (52) von einem Teilnehmer (14) auf eine Datenleitung (12) des Datenbusses (10) über einen induktiv an die Datenleitung (12) angekoppelten Sende-/Empfangskopf (18) des Teilnehmers (14) ;
b) Empfang des **durch** die induktive Übertragung abgeschwächten elektrischen Signals (48) **durch** einen galvanisch mit der Datenleitung (12) verbundenen Verstärker (36);
c) Verstärken des empfangenen Signals (48) in dem Verstärker (36);
d) Einkoppeln des verstärkten Signals (50) auf die Datenleitung (12) ;
e) Empfang des auf die Datenleitung (12) übertragenen verstärkten Signals (50) **durch** einen induktiv an die Datenleitung (12) angekoppelten Sende-/Empfangskopf (18) eines anderen Teilnehmers (16).

19. Verfahren nach Anspruch 18, **dadurch gekennzeichnet, daß** dann,_ wenn ein Teilnehmer (14, 16) gleichzeitig eine Nachricht sendet und eine Nachricht empfängt, er im Wege eines Vergleichs von empfangenen Prioritätsbits und selbst gesendeten Prioritätsbits ermittelt, ob er die Priorität zum Senden von Datenbits besitzt.

20. Verfahren nach Anspruch 19, **dadurch gekennzeichnet, daß** ein Teilnehmer nicht die Priorität zum Senden von Datenbits besitzt, wenn er ein Signal empfängt, das einen dominanten logischen Bitzustand repräsentiert, und er annähernd gleichzeitig ein Signal sendet, das einen rezessiven logischen Bitzustand repräsentiert.

21. Verfahren nach Anspruch 20, **dadurch gekennzeichnet, daß** das den dominanten Bitzustand repräsentierende Signal ein Stromimpuls und das den rezessiven Bitzustand repräsentierende Signal das Fehlen eines Stromimpulses ist.

22. Verfahren nach einem der Ansprüche 18 bis 21, **dadurch gekennzeichnet, daß** die Nachrichten das in dem CAN-Standard festgelegte Format aufweisen.

## Claims

1. A serial data bus with a data line (12) for transmitting electrical signals (48, 50) representing bit states, and with several multi-master users (14, 16), between which messages are capable of being exchanged via the data line (12) in event-driven manner in accordance with the broadcast principle,
**characterised in that**
at least two users (14, 16) have a transmitting/receiving head (18) capable of being inductively coupled onto the data line (12), via which head electrical signals (50) are picked up from the data line in non-contacting manner and can be transmitted to said data line in non-contacting manner, and **in that** an amplifier (36) which receives electrical signals (48) which have been transmitted to the data line (12) inductively from the at least two users (14, 16) is galvanically connected to the data line (12) and after the amplification of said signals couples them back into the data line (12).

2. Data bus according to Claim 1, **characterised in that** the messages contain priority bits, by the reception of which in the case of a simultaneous transmission of messages by several users (14, 16) a user (14, 16) is able to ascertain, by way of a comparison with priority bits transmitted by itself, whether it possesses the priority for transmitting data bits.

3. Data bus according to Claim 2, **characterised in that** a user (14, 16) does not possess the priority for transmitting data bits if it receives a signal that represents a dominant logical bit state and it transmits approximately simultaneously a signal that represents a recessive logical bit state.

4. Data bus according to one of the preceding claims, **characterised in that** the signal representing the dominant bit state is a current pulse, and the signal representing the recessive bit state is the absence of a current pulse.

5. Data bus according to one of the preceding claims, **characterised in that** the transmitting/receiving head (18) comprises:
a) a transmitting coil (30),
b) a receiving coil (34),
c) a transmitting module (24), by which electrical signals (32) that can be applied to the transmitting coil (30) are capable of being generated from digital information,
d) a receiving module (22), by which digital information is capable of being generated from electrical signals (50) that can be picked up by the receiving coil (34), and
e) a logic unit (20), connected to the transmitting module (24) and to the receiving module (22), for assembling and evaluating messages from digital information obtained by the receiving module (22) and for generating digital information for the transmitting module (24).

6. Data bus according to one of Claims 2 or 3 and according to Claim 5, **characterised in that** the priority of messages can be ascertained by the logic unit (20).

7. Data bus according to one of the preceding claims, **characterised in that** after reception of a signal (48) from one of the at least two users (14, 16) the amplified signal (50) can be transmitted to the data line (12) by the amplifier (36) within 50 %, preferably within 25%, of the clock-pulse length that lies at least between two signals transmitted to the data line (12) from one of the at least two users (14, 16).

8. Data bus according to one of the preceding claims, **characterised in that** the messages exhibit the format defined in the CAN standard.

9. Data bus according to one of the preceding claims, **characterised in that** at least one user (14, 16) is arranged so as to be capable of being traversed along the data line (12).

10. A movement system with a first part and a second part, arranged so as to be mobile relative to the first part, **characterised in that** users of a data bus according to Claim 9 are arranged at a fixed location on the two parts.

11. Movement system according to Claim 10, **characterised in that** it is constructed as a track-guided transportation system with a track (62) and with several vehicles (64, 66) capable of being displaced along the track (62), the transportation system (60) comprising, for the purpose of communication between the vehicles (64, 66), a data bus (10) according to Claim 9, the data line (12) of which is arranged along the track (62) of the transportation system (60), and the users of which are the vehicles (64, 66).

12. Movement system according to Claim 11, **characterised in that** at least one vehicle includes a vehicle control device (78) which is connected to the transmitting/receiving head (18).

13. Movement system according to Claim 11 or 12, **characterised in that** the amplifier (36) is connected to a control unit (44; 441, 442, 443) for controlling the vehicles (64, 66) along the data bus (10).

14. Movement system according to Claim 13, **characterised in that** the amplifier (36; 361, 362, 363) is connected to the control unit (44; 441, 442, 443) via a CAN bus (821, 822, 823).

15. Movement system according to Claim 13 or 14, **characterised in that** it is subdivided into several segments (601, 602, 603) which each include a data bus (10) with a control unit (441, 442, 443), and **in that** the control unit (441, 442, 443) for the individual segments is connected to a superordinate central control device (94).

16. Movement system according to Claim 15, **characterised in that** the track (62) for the vehicles (64, 66) extends over and beyond several segments (601, 602, 603) in such a manner that vehicles (64, 66) are able to travel over segment boundaries.

17. Movement system according to one of Claims 11 to 16, **characterised in that** it is constructed as an overhead-conveyor system (60) for the transportation of objects, in particular motor-vehicle bodies (76.).

18. A serial method for event-driven transmission of messages between several multi-master users (14, 16) in accordance with the broadcast principle via a data bus (10), **characterised by** the following steps:
a) non-contacting transmission of an electrical signal (52) from a user (14) to a data line (12) of the data bus (10) via a transmitting/receiving head (18) of the user (14) which is inductively coupled onto the data line (12);
b) reception of the electrical signal (48) attenuated by the inductive transmission by an amplifier (36) which is galvanically connected to the data line (12);
c) amplification of the received signal (48) in the amplifier (36);
d) coupling of the amplified signal (50) into the data line (12);
e) reception of the amplified signal (50) transmitted to the data line (12) by a transmitting/receiving head (18) of another user (16) which is inductively coupled onto the data line (12).

19. Method according to Claim 18, **characterised in that** when a user (14, 16) simultaneously transmits a message and receives a message it ascertains, by way of a comparison of received priority bits and priority bits transmitted itself, whether it possesses the priority for transmitting data bits.

20. Method according to Claim 19., **characterised in that** a user does not possess the priority for transmitting data bits if it receives a signal that represents a dominant logical bit state and it transmits approximately simultaneously a signal that represents a recessive logical bit state.

21. Method according to Claim 20, **characterised in that** the signal representing the dominant bit state is a current pulse, and the signal representing the recessive bit state is the absence of a current pulse.

22. Method according to one of Claims 18 to 21, **characterised in that** the messages exhibit the format defined in the CAN standard.

## Revendications

1. Bus de données série comprenant une ligne de données (12) pour la transmission de signaux électriques (48, 50) représentant des états de bit et comprenant plusieurs abonnés multi-maîtres (14, 16) entre lesquels des messages peuvent être échangés en fonction des événements selon le principe de la diffusion générale sur la ligne de données (12),
**caractérisé par le fait**
**qu'**au moins deux abonnés (14, 16) présentent une tête d'émission / de réception (18) pouvant être couplée par induction à la ligne de données (12), par laquelle les signaux électriques (50) peuvent être prélevés de la ligne de données et transmis à celle-ci sans contact, et qu'un amplificateur (36) est relié galvaniquement à la ligne de données (12) qui reçoit et réinjecte sur la ligne de données (12) après leur amplification les signaux électriques (48) qui ont été transmis par induction sur la ligne de données (12) par les au moins deux abonnés (14, 16).

2. Bus de données selon la revendication 1, **caractérisé par le fait que** les messages contiennent des bits de priorité par la réception desquels un abonné (14, 16) peut, dans le cas d'un envoi simultané de messages par plusieurs abonnés (14, 16), déterminer s'il possède la priorité pour l'envoi de bits de données au moyen d'une comparaison avec les bits de priorité envoyés par lui-même.

3. Bus de données selon la revendication 2, **caractérisé par le fait qu'**un abonné (14, 16) ne possède pas la priorité pour l'envoi de bits de données s'il reçoit un signal qui représente un état de bit logique dominant et envoie approximativement en même temps un signal qui représente un état de bit logique récessif.

4. Bus de données selon l'une des revendications précédentes, **caractérisé par le fait que** le signal représentant l'état de bit dominant est une impulsion de courant et le signal représentant l'état de bit récessif l'absence d'une impulsion de courant.

5. Bus de données selon l'une des revendications précédentes, **caractérisé par le fait que** la tête d'émission / de réception (18) comprend :
a) une bobine d'émission (30),
b) une bobine de réception (34),
c) un module d'émission (24) capable de générer à partir d'informations numériques des signaux électriques (32) qui peuvent être appliques à la bobine d'émission (30),
d) un module de réception (22) capable de générer à partir d'informations numériques des signaux électriques (50) qui peuvent être prélevés par la bobine de réception (34) et
e) une unité logique (20) reliée au module d'émission (24) et au module de réception (22) pour la constitution et l'évaluation de messages à partir d'informations numériques reçues par le module de réception (22) et pour la génération d'informations numériques pour le module d'émission (24).

6. Bus de données selon l'une des revendications 2 ou 3 et selon la revendication 5, **caractérisé par le fait qu'**il est possible de déterminer la priorité de messages au moyen de l'unité logique (20).

7. Bus de données selon l'une des revendications précédentes, **caractérisé par le fait qu'**après une réception d'un signal (48) d'un des au moins deux abonnés (14, 16), l'amplificateur (36) peut transmettre sur la ligne de données (12) le signal amplifié (50) en l'espace de 50 %, de préférence en l'espace de 25 % de la longueur de cycle qui se situe entre deux signaux transmis sur la ligne de données (12) par un des au moins deux abonnés (14, 16).

8. Bus de données selon l'une des revendications précédentes, **caractérisé par le fait que** les messages présentent le format défini dans le standard CAN.

9. Bus de données selon l'une des revendications précédentes, **caractérisé par le fait qu'**au moins un abonné (14, 16) est disposé de manière mobile le long de la ligne de données (12).

10. Système de déplacement comprenant une première partie et une deuxième partie qui est disposée de manière mobile par rapport à la première partie, **caractérisé par le fait que** des abonnés d'un bus de données selon la revendication 9 sont disposés à poste fixe sur les deux parties.

11. Système de déplacement selon la revendication 10, **caractérisé par le fait qu'**il est réalisé sous forme de système de transport sur rails avec une voie (62) et plusieurs véhicules (64, 66) déplaçables le long de la voie (62), le système de transport (60) comprenant un bus de données (10) selon la revendication 9 pour la communication entre les véhicules (64, 66), dont la ligne de données (12) est disposée le long de la voie (62) du système de transport (60) et dont les abonnés sont les véhicules (64, 66).

12. Système de déplacement selon la revendication 11, **caractérisé par le fait qu'**au moins un véhicule comprend une commande de véhicule (78) qui est reliée à la tête d'émission / de réception (18).

13. Système de déplacement selon la revendication 11 ou 12, **caractérisé par le fait que** l'amplificateur (36) est relié à une unité de commande (44 ; 441, 442, 443) pour la commande des véhicules (64, 66) le long du bus de données (10).

14. Système de déplacement selon la revendication 13, **caractérisé par le fait que** l'amplificateur (36 ; 361, 362, 363) est relié à l'unité de commande (44, 441, 442, 443) par un bus CAN (821, 822, 823).

15. Système de déplacement selon la revendication 13 ou 14, **caractérisé par le fait qu'**il est divisé en plusieurs segments (601, 602, 603) qui comprennent chaque fois un bus de données (10) avec une unité de commande (441, 442, 443) et que l'unité de commande (441, 442, 443) pour les différents segments est reliée à une commande centrale (94) supérieure.

16. Système de déplacement selon la revendication 15, **caractérisé par le fait que** la voie (62) pour les véhicules (64, 66) s'étend sur plusieurs segments (601, 602, 603) de telle manière que des véhicules (64, 66) puissent traverser des limites de segments.

17. Système de déplacement selon l'une des revendications 11 à 16, **caractérisé par le fait qu'**il est réalisé sous forme de système de convoyeur suspendu (60) destiné au transport d'objets, en particulier de carrosseries d'automobiles (76).

18. Procédé de transmission en série de messages en fonction des événements entre plusieurs abonnés multi-maîtres (14, 16) sur un bus de données (10) selon le principe de la diffusion générale, **caractérisé par** les étapes suivantes :
a) transmission sans contact d'un signal électrique (52) d'un abonné (14) sur une ligne de données (12) du bus de données (10) par une tête d'émission / de réception (18) de l'abonné (14) couplée par induction à la ligne de données (12) ;
b) réception du signal électrique (48) affaibli par la transmission inductive par un amplificateur (36) relié galvaniquement à la ligne de données (12) ;
c) amplification du signal reçu (48) dans l'amplificateur (36) ;
d) injection du signal amplifié (50) sur la ligne de données (12) ;
e) réception du signal amplifié (50) transmis sur la ligne de données (12) par une tête d'émission / de réception (18) d'un autre abonné (16) couplée par induction à la ligne de données (12).

19. Procédé selon la revendication 18, **caractérisé par le fait que** quand un abonné (14, 16) envoie un message et reçoit un message en même temps, il détermine s'il possède la priorité pour l'envoi de bits de données au moyen d'une comparaison des bits de priorité reçus avec les bits de priorité envoyés par lui-même.

20. Procédé selon la revendication 19, **caractérisé par le fait qu'**un abonné ne possède pas la priorité pour l'envoi de bits de données s'il reçoit un signal qui représente un état de bit logique dominant et envoie approximativement en même temps un signal qui représente un état de bit logique récessif.

21. Procédé selon la revendication 20, **caractérisé par le fait que** le signal représentant l'état de bit dominant est une impulsion de courant et le signal représentant l'état de bit récessif l'absence d'une impulsion de courant.

22. Procédé selon l'une des revendications 18 à 21, **caractérisé par le fait que** les messages présentent le format défini dans le standard CAN.
